# EUROPÄISCHE PATENTSCHRIFT

(11) **EP 1 305 936 B1**
(45) Veröffentlichungstag und Bekanntmachung des Hinweises auf die Patenterteilung: **08.10.2008**
(21) Anmeldenummer: 01955251.2
(22) Anmeldetag: 16.07.2001
(51) Int. Cl.: H04M 7/00, H04M 3/54

(54) **VORRICHTUNG UND VERFAHREN ZUR ANRUFUMLENKUNG IN TELEKOMMUNIKATIONSNETZEN**
DEVICE AND METHOD FOR CALL DIVERSION IN TELECOMMUNICATION NETWORKS
DISPOSITIF ET PROCEDE DE TRANSFERT D'APPEL DANS DES RESEAUX DE TELECOMMUNICATION

(30) Priorität: 31.07.2000 DE 10037291
(43) Veröffentlichungstag der Anmeldung: 02.05.2003
(73) Patentinhaber: Nokia Siemens Networks GmbH & Co. KG, 81541 München (DE)
(72) Erfinder: BRUMM, Thomas, 82131 Gauting-Königswiesen (DE); KLEINER, Patrick, 81476 München (DE); KLOTZ, Udo, 82061 Neuried (DE); LÖBIG, Norbert, 64291 Darmstadt (DE); ROMANSKI, Irena, 82544 Egling (DE); ZINKL, Walter, A-1100 Wien (AT); KRESNIK, Robert, 2310 Slovenska Bistrica (SI)
(74) Vertreter: Maier, Daniel Oliver
(86) Internationale Anmeldenummer: PCT/DE2001/002657
(87) Internationale Veröffentlichungsnummer: WO 2002/011412

(56) Entgegenhaltungen:
- EP-A- 0 959 593
- US-A- 5 889 845

## Beschreibung

Die vorliegende Erfindung betrifft ein Verfahren zur Anrufumlenkung in Telekommunikationsnetzen und ein Telekommunikationsnetz, welches das Verfahren ausführt. Insbesondere betrifft sie eine Vorrichtung und ein Verfahren zur Anrufumlenkung in einem Sprachnetz, das mit einem. Datennetz verbunden ist, wobei die Anrufumlenkung nur dann erfolgt, wenn ein Teilnehmer sich über ein Endgerät in dem Datennetz nicht angemeldet/eingeloggt hat.

In Telekommunikationsnetzen, die ursprünglich konzipiert wurden und fortentwickelt werden, um Sprachverbindungen zur Verfügung stellen, und die daher als Sprachnetze bezeichnet werden sollen, sind vermittlungstechnische Leistungsmerkmale bekannt, die sicherstellen, dass wichtige Anrufe nicht verlorengehen. So stellen diese Sprachnetze, wie beispielsweise die Telefonnetze als Festnetze, üblicherweise die Leistungsmerkmale "Umlenkung bei Besetzt", für den Fall zur Verfügung, dass mit dem gerufenen Teilnehmer gerade eine andere Verbindung besteht, oder "Umlenkung bei Nichtmelden", wenn der gerufene Teilnehmer den Anruf nicht entgegennimmt, sowie "sofortige Anrufumlenkung", falls der gerufene Teilnehmer alle ankommenden Anrufe zu einem anderen Teilnehmeranschluß umlenken möchte. Dabei kann der Anruf zu einem anderen Teilnehmeranschluß in dem gleichen Sprachnetz oder einem anderen, mit dem ersten verbundenen Sprachnetz umgelenkt werden. Weitere Möglichkeiten für Umlenkziele sind eine Ansage oder ein Anrufbeantworter.

Die dargestellten Möglichkeiten bestehen grundsätzlich auch, wenn ein Teilnehmer über ein Datennetz mit einem Sprachnetz verbunden ist. Ein solches Datennetz ist beispielsweise ein lokales Computernetzwerk wie ein Local-Area-Network (LAN) oder das Internet. Diese Netze sind ursprünglich rein zur Übertragung von Daten, die keiner gesprochenen Sprache entsprechen, entwickelt worden und stellen daher zunächst die obengenannten Leistungsmerkmale nicht zur Verfügung. Sie basieren auf einer Paketvermittlung der Daten. Da die Datenübertragungsraten dieser Datennetze inzwischen sehr hohe, grundsätzlich für Sprachübertragung geeignete Werte erreichen, wurden Verfahren entwickelt, auch über solche Netze Sprache bzw. Telefonanrufe zu übertragen. Somit ist nur noch ein Netz nötig und nicht zwei parallele Netze, das Datennetz und das Sprachnetz.

Ein Beispiel hierfür ist eine Nutzung IP-basierter Datennetze zur Sprachübertragung nach dem H.323-Standard. Nach diesem Standard sind unter anderen folgende Komponenten vorgesehen: Terminals, Gateway und Gatekeeper. Terminals sind mit dem Datennetz verbundene Endgeräte. Jedoch:ist es bei diesen Datennetzen stets nötig, dass der Teilnehmer sich mit diesen Endgeräten anmeldet oder einloggt. Ein Gateway dient der Umsetzung der Datenprotokolle zwischen Datennetz und Sprachnetz. Ein Gatekeeper ist für die Verwaltung und Kontrolle der Benutzerdienste sowie der Netzkapazitäten in dem unter dem H.323 Standard betriebenen Datennetz zuständig. Insbesondere erfolgt im Gatekeeper die Adressierung eines ankommenden Anrufs im Datennetz. Die Rufnummer (Telefonnummer) wird in eine Adresse des Datennetzes umgesetzt. Im Gatekeeper liegt daher auch die Information vor, ob unter dieser Adresse des Datennetzes überhaupt ein Terminal angemeldet ist. Mit dem H.323 Standard können Telefonanrufe im Internet bzw. in IP-basierten Netzen übertragen werden. Ist das Endgerät des Teilnehmers gerade nicht angemeldet, so entsteht das Problem, dass ein im Sprachnetz ankommender Anruf, der über einen Gateway, in das Datennetz weitervermittelt wird, verloren gehen kann. Auch ein Anrufbeantworter kann dieses Problem nicht lösen, da er ebenfalls angemeldet sein müsste. Es ist daher wünschenswert, auch in diesem Fall eine Anrufumlenkung zu erreichen.

Aus der Schrift US 5,889,845 "System and method for providing a remote user with a virtual presence to an office" ist ein System bekannt, das es einem Teilnehmer in einem Telekommunikationsnetz ermöglicht, virtuell in einem Büro erreichbar zu sein. Dazu wird vom Teilnehmer eine Verbindung zu einem so genannten "Virtual Presence Server" hergestellt, über welchen die Verbindung zu einer firmeneigenen Nebenstellenanlage sowie zu einem firmeneigenen Datennetz ermöglicht wird. In der Folge werden dann z.B. ankommende Anrufe, Faxe, E-mails, etc. über diesen Server an den Teilnehmer weitergeleitet und umgekehrt. Eine Voraussetzung bei diesem System ist es allerdings, dass stets eine aktive Verbindung zwischen dem Teilnehmer und dem angesprochenen "Virtual Presence Server" vorliegt, d.h. nur wenn der Teilnehmer beim firmeneigenen Datennetz bzw. beim genannten Server angemeldet ist, werden beispielsweise ankommende Anrufe, etc. an den Teilnehmer weitergeleitet.

In der Schrift EP 0 959 593 A2 "Method of completing long distance POTS calls with IP telephony endpoints" wird ein Verfahren beschrieben, von dem eine Weiterleitung von Gesprächsverbindungen, welche ihren Ursprung in einem verbindungsorientierten Telekommunikationsnetz haben, an ein Endgerät, welches an ein paketvermittelndes Datennetz angeschlossen ist, ermöglicht wird. Bei diesem Verfahren wird allerdings mit Hilfe einer Datenbank, welche sowohl eine Verbindung zum verbindungsorientierten Telekommunikationsnetz als auch zum paketvermittelnden Datennetz umfasst, festgestellt, ob das Endgerät gerade aktiv mit dem Datennetz verbunden ist oder nicht. Ist das Endgerät aktiv mit dem Datennetz verbunden, so werden ankommende Anrufe beispielsweise am Bildschirm des Endgerätes signalisiert, umgeleitet oder auch zum Endgerät durchgestellt (z.B. durch Konvertierung der Sprachinformation in ein Format des jeweiligen Datennetzes). Vom in der Schrift EP 0 959 593 A2 beschriebenen Verfahren werden allerdings nur jene Fälle behandelt, bei denen der gerufene Teilnehmer im wesentlichen durch eine aktive Verbindung zum Datennetz die Verbindung blockiert bzw. besetzt hält und es werden Wege aufgezeigt, diese Blockierung zu umgehen. Eine Anrufumlenkung für den Fall, dass das gerufene Endgerät nicht aktiv mit dem Datennetz verbunden ist bzw. z.B. ausgeschaltet ist, wird von dieser Schrift allerdings nicht beschrieben.

Es ist daher Aufgabe der vorliegenden Erfindung, ein Verfahren zur Verfügung zu stellen, mit dem ein Verbindungswunsch für einen Teilnehmer im Datennetz für den Fall umgeleitet wird, daß der Teilnehmer in dem Datennetz nicht angemeldet ist.

Diese Aufgabe wird mit dem Verfahren und der Vorrichtung der Patentansprüche 1 und 7 gelöst. Vorteilhafte Ausgestaltungen ergeben sich aus den Unteransprüchen.

Nach dem Anspruch 1 stellt bei dem erfindungsgemäßen Verfahren in einem Telekommunikationsnetz in einem ersten Schritt ein Vermittlungsserver fest, daß ein Anruf für einen Teilnehmer im Datennetz vorliegt. Ein Telekommunikationsnetz besteht aus einem Datennetz (Paketnetz) und/oder einem Sprachnetz (z.B. Festnetz). Zugang zu einem Datennetz ist durch den Zustand "eingeloggt" möglich. Das Telekommunikationsnetz hat einen Vermittlungsserver, der feststellt, ob ein Verbindungswunsch zu einem Teilnehmer besteht, und es hat einen Verwaltungsserver, der den Zustand des Teilnehmers eingeloggt/nicht eingeloggt erkennt.

Eine Adresse für eine Anrufumlenkung für den Teilnehmer ist im Vermittlungsserver oder Verwaltungsserver gespeichert. Sodann übermittelt der Vermittlungsserver die Teilnehmeradresse an den Verwaltungsserver des Datennetzes. Nach der Überprüfung, ob ein Endgerät des Teilnehmers in dem Datennetz angemeldet (eingeloggt) ist, übermittelt der Verwaltungsserver das Ergebnis der Überprüfung an den Vermittlungsserver. Wenn der Verwaltungsserver das Ergebnis "nicht angemeldet" übermittelt, wird der Anruf zu der vorgegebenen Adresse durch den Vermittlungsserver umgelenkt.

Vorteilhaft ist das Verfahren bei einem Telekommunikationsnetz als Netz mit Paketvermittlung anwendbar.

Die Adresse für eine Anrufumlenkung kann von dem Verwaltungsserver mit dem Ergebnis der Überprüfung an den Vermittlungsserver übermittelt werden.

Günstig wird der Vermittlungsserver eine vorzunehmende Anrufumlenkung nicht vornehmen, wenn eine maximale Anzahl seriell vorzunehmender Anrufumlenkungen überschritten wird.

Vorteilhaft wird das Verfahren bei dem Internet als Datennetz oder einem Local-Area-Network (LAN) als Datennetz angewandt.

Gemäß dem Patentanspruch 7 weist ein Telkommunikationsnetz, bei dem das erfindungsgemäße Verfahren zur Anwendung kommt, mindestens ein Datennetz auf, zu dem ein Teilnehmer nur Zugang erhält, wenn ein Endgerät des Teilnehmers in diesem angemeldet (eingeloggt) ist. Mit dem Datennetz ist zumindest ein Sprachnetz, das ein zur Sprachübermittlung geeignetes Telekommunikationsnetz ist, verbunden, und der Teilnehmer erhält zu diesem über das Datennetz Zugang. Das Sprachnetz weist einen Vermittlungs-Server auf, der Anrufumlenkungen zu anderen Zielen im Telekommunikationsnetz zur Verfügung stellt. Ein Verwaltungsserver des Datennetzes dient zur Verwaltung und Kontrolle der Benutzerdienste und Netzkapazitäten in dem Datennetz und es wird zumindest eine Adresse für eine Anrufumlenkung für den Teilnehmer im Vermittlungsserver oder Verwaltungsserver gespeichert. Der Vermittlungsserver weist eine Abfragemöglichkeit auf, die bei dem Verwaltungsserver das Bestehen einer Anmeldung des Endgerätes des Teilnehmers zum Datennetz abfragt, wenn der Teilnehmer aus dem Sprachnetz gerufen wird. Der Vermittlungsserver kann den Anruf zur gespeicherten Adresse umlenken, wenn als Ergebnis der Abfrage "nicht angemeldet" übermittelt wird. Mit minimalstem Aufwand und unter Benutzung vorhandener vermittlungstechnischer Mittel kann somit auch in diesem Fall eine Anrufumlenkung erreicht werden.

Insbesondere ist dies vorteilhaft, wenn das Datennetz ein Netz mit Paketvermittlung ist.

Günstig kann die Adresse für eine Anrufumlenkung bei dem Verwaltungsserver des Datennetzes gespeichert werden und mit dem Ergebnis der Abfrage an den Vermittlungsserver übertragen werden.

Vorteilhaft kann der Vermittlungsserver eine maximale Anzahl für seriell vorzunehmende Anrufumlenkungen abspeichern. Dadurch kann eine mehrfache Anrufumlenkung begrenzt werden.

Günstigerweise ist das Paketnetz das Internet und der Verwaltungsserver ein Gatekeeper.
Ebenso kann das Paketnetz ein Local-Area-Network (LAN) sein.

Anhand der Figur wird nachfolgend ein Ausführungsbeispiel einer erfindungsgemäßen Vorrichtung zur Anrufumlenkung und des erfindungsgemäßen Verfahrens näher erläutert.

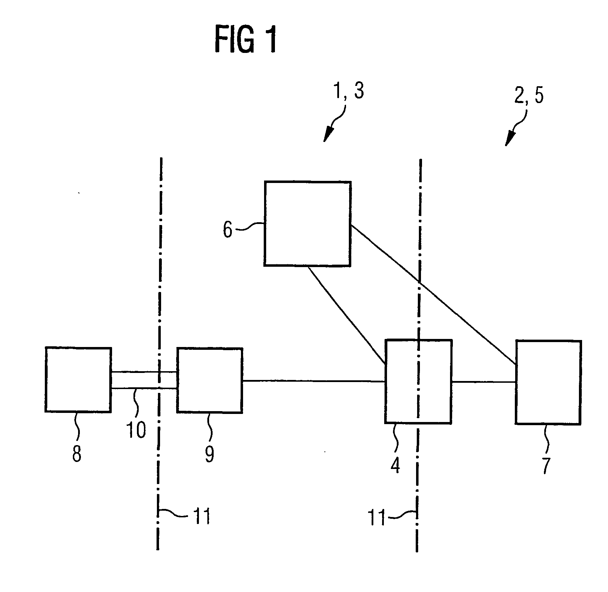

Die Fig. 1 zeigt eine Schemaskizze eines Telekommunikationsnetz, das ein Datennetz 1 und ein Sprachnetz 2 aufweist. Im vorliegenden Beispiel ist das Datennetz 1 das Internet 3 und das Sprachnetz 2 ein beliebiges Telefonnetz 5 als Festnetz. Das Internet 3 ist über einen Gateway 4, der die Transportprotokolle umsetzt, mit dem Telefonnetz 5 verbunden. Bei der Weiterleitung von Anrufen nach dem H.323 Standard aus dem Telefonnetz 5 in das Internet 3 ist ein Gatekeeper 6 als Verwaltungsserver vorhanden, der zur Verwaltung und Kontrolle der Benutzerdienste und Netzkapazitäten im Internet 3 dient. Ein Vermittlungsserver 7 in dem Telefonnetz 5 stellt die schon bekannten Leistungsmerkmale des Telefonnetzes 5, wie Anrufumlenkungen zur Verfügung, wenn ein Teilnehmeranschluß besetzt oder nicht erreichbar ist. Der Teilnehmer, der nun die Möglichkeit einer Sprachübertragung durch das Internet 3 nutzt, ist über ein Endgerät 8 mit dem Internet 3 verbunden, wobei das Endgerät 8 angemeldet bzw. eingeloggt sein muß. Die Anmeldung im Internet 3 erfolgt über einen Server 9 eines Service-Providers und ist durch eine Doppellinie 10 verdeutlicht. Die Anmeldung des Telefondienstes erfolgt im Gatekeeper (6). Zwei gestrichelte Trennlinien 11 zeigen die Grenze zwischen Internet 3 und Telefonnetz 5 sowie Internet 3 und Endgerät 8 an.

Wenn bei dem Vermittlungsserver 7 ein Anruf für den Teilnehmer vorliegt, der aus dem Telefonnetz 5 stammt, übermittelt dieser die Teilnehmeradresse an den Gatekeeper 6 des Internets 3. Nach der Überprüfung, ob das Endgerät 8 des Teilnehmers in dem Internet 3 angemeldet (eingeloggt) ist, übermittelt der Gatekeeper 6 das Ergebnis der Überprüfung an den Vermittlungsserver 7. Im Fall des Fehlens einer solchen Anmeldung 11 wird der Anruf zu einer vorgegebenen Adresse durch den Vermittlungsserver 7 umgelenkt. Die maximale Anzahl wiederholter Rufumlenkungen kann begrenzt werden, um eine mehrfache Anrufumlenkung hintereinander zu verhindern.

## Patentansprüche

1. Verfahren zur Anrufumlenkung in einem Telekommunikationsnetz, das ein Datennetz (1), zu dem ein Teilnehmer nur Zugang erhält, wenn ein Endgerät (8) des Teilnehmers sich in diesem Datennetz (1) anmeldet/einloggt, und ein mit ihm verbundenes Sprachnetz (2) umfasst, das ein zur Sprachübermittlung geeignetes Telekommunikationsnetz ist, zu dem der Teilnehmer über das Datennetz (1) Zugang erhält, wobei das Telekommunikationsnetz einen Vermittlungsserver (7) aufweist, der Anrufumlenkungen zu anderen Zielen im Telekommunikationsnetz zur Verfügung stellt und einen Verwaltungsserver (6) aufweist, der zur Verwaltung und Kontrolle der Benutzerdienste und Netzkapazitäten in dem Datennetz (1) dient, wobei eine Adresse für eine Anrufumlenkung im Vermittlungsserver (7) oder Verwaltungsserver (6) gespeichert ist, mit den Verfahrensschritten:
a.) Feststellen, dass ein Anruf für den Teilnehmer vorliegt durch den Vermittlungsserver (7),
b.) Übermitteln der Teilnehmeradresse an den Verwaltungsserver (6),
c.) Überprüfen mit Hilfe des Verwaltungsservers (6), ob ein Endgerät (8) mit dieser Teilnehmeradresse angemeldet/eingeloggt ist.
d.) Übermitteln des Ergebnisses der Überprüfung vom Verwaltungsserver (6) an den Vermittlungsserver (7) und
e.) Umlenken des Anrufs zu der vorgegebenen Adresse durch den Vermittlungsserver (7), wenn der Verwaltungsserver das Ergebnis "nicht angemeldet" übermittelt.

2. Verfahren zur Anrufumlenkung in Telekommunikationsnetzen nach Anspruch 1,
**dadurch gekennzeichnet,**
**daß** das Datennetz (1) ein Netz mit Paketvermittlung ist.

3. Verfahren zur Anrufumlenkung in Telekommunikationsnetzen nach Anspruch 1 oder 2,
**dadurch gekennzeichnet,**
**daß** die Adresse für die Anrufumlenkung von dem Verwaltungsserver mit dem Ergebnis der Überprüfung an den Vermittlungsserver (7) übermittelt wird, oder aus einem Speicherplatz des Vermittlungsservers ausgelesen wird.

4. Verfahren zur Anrufumlenkung in Telekommunikationsnetzen nach einem der Ansprüche 1 bis 3,
**dadurch gekennzeichnet,**
**daß** der Vermittlungsserver (7) eine vorzunehmende Anrufumlenkung nicht vornimmt, wenn eine maximale Anzahl serieller Anrufumlenkungen überschritten wird.

5. Anwendung des Verfahrens zur Anrufumlenkung nach einem der vorhergehenden Ansprüche bei einem Local-Area-Network (LAN) als Datennetz (1).

6. Anwendung des Verfahrens zur Anrufumlenkung nach einem der vorhergehenden Ansprüche bei dem Internet (3) als Datennetz (1).

7. Telekommunikationsnetz zur Ausführung des Verfahrens nach einem der Ansprüche 1 bis 6, das ein Datennetz (1), zu dem ein Teilnehmer nur Zugang erhält, wenn ein Endgerät (8) des Teilnehmers in diesem angemeldet/eingeloggt ist, und ein Sprachnetz (2) umfasst, das ein zur Sprachübermittlung geeignetes Telekommunikationsnetz ist, und zu dem der Teilnehmer über das Datennetz (1) Zugang erhält, mit einem Vermittlungsserver (7) des Sprachnetzes (2), der Anrufumlenkungen zu anderen Zielen im Telekommunikationsnetz zur Verfügung stellt, und mit einem Verwaltungsserver (6), der zur Verwaltung und Kontrolle der Benutzerdienste und Netzkapazitäten in dem Datennetz (1) dient, wobei zumindest eine Adresse für eine Anrufumlenkung für den Teilnehmer im Vermittlungsserver (7) oder Verwaltungsserver (6) gespeichert ist,
**dadurch gekennzeichnet,**
**dass** der Vermittlungsserver (7) dazu geeignet ist, wenn der Teilnehmer aus dem Sprachnetz (2) gerufen wird, eine Abfragemöglichkeit aufzuweisen, um bei dem Verwaltungsserver (6) das Bestehen einer Anmeldung des Endgerätes (8) des Teilnehmers zum Datennetz (1) abzufragen und dass der Vermittlungsserver (7) im Fall des Fehlens einer solchen Anmeldung geeignet ist, eine Anrufumlenkung zur gespeicherten Adresse durchzuführen.

8. Telekommunikationsnetz nach Anspruch 7,
**dadurch gekennzeichnet,**
**dass** das Datennetz (1) ein Netz mit Paketvermittlung ist.

9. Telekommunikationsnetz nach Anspruch 7 oder 8,
**dadurch gekennzeichnet,**
**dass** die Adresse für eine Anrufumlenkung bei dem Verwaltungsserver (6) des Datennetzes (1) gespeichert ist und der Verwaltungsserver (6) dazu geeignet ist, die Adresse mit dem Ergebnis der Abfrage an den Vermittlungsserver (7) zu übertragen.

10. Telekommunikationsnetz nach einem der Ansprüche 7 bis 9,
**dadurch gekennzeichnet,**
**dass** der Vermittlungsserver (7) dazu geeignet ist, eine maximale Anzahl für vorzunehmende serielle Anrufumlenkungen abzuspeichern.

11. Telekommunikationsnetz nach einem der vorhergehenden Ansprüche,
**dadurch gekennzeichnet,**
**dass** das als Paketnetz ausgebildete Datennetz (1) das Internet (3) ist und der Verwaltungsserver (6) ein Gatekeeper (6) ist.

12. Telekommunikationsnetz nach einem der Ansprüche 7 bis 11,
**dadurch gekennzeichnet,**
**daß** das als Paketnetz ausgebildete Telekommunikationsnetz ein Local-Area-Network (LAN) ist und der Verwaltungsserver (6) ein Gatekeeper ist.

## Claims

1. Method for call redirection in a telecommunication network which comprises a data network (1), which a subscriber can only access when a terminal (8) belonging to the subscriber registers in/logs into this data network (1), and a voice network (2) connected thereto, which is a telecommunication network suitable for voice transmission which the subscriber can access via the data network (1), wherein the telecommunication network has a call-processing server (7), which provides call redirections to other destinations in the telecommunication network, and has a management server (6), which is used for managing and controlling the user services and network capacities in the data network (1), wherein an address for call redirection is stored in the call-processing server (7) or in the management server (6), having the following method steps:
a.) the call-processing server (7) establishes that there is a call for the subscriber,
b.) the subscriber address is transmitted to the management server (6),
c.) the management server (6) is used to check whether a terminal (8) with this subscriber address is registered/logged in,
d.) the result of the check is transmitted from the management server (6) to the call-processing server (7), and
e.) the call is redirected to the prescribed address by the call-processing server (7) if the management server transmits the result "not registered".

2. Method for call redirection in telecommunication networks according to Claim 1,
**characterized**
**in that** the data network (1) is a network with packet switching.

3. Method for call redirection in telecommunication networks according to Claim 1 or 2,
**characterized**
**in that** the address for the call redirection is transmitted from the management server with the result of the check to the call-processing server (7), or is read from a memory location in the call-processing server.

4. Method for call redirection in telecommunication networks according to one of Claims 1 to 3,
**characterized**
**in that** the call-processing server (7) does not perform call redirection which is to be performed if a maximum number of serial call redirections is exceeded.

5. Use of the method for call redirection according to one of the preceding claims when a local area network (LAN) is the data network (1).

6. Use of the method for call redirection according to one of the preceding claims when the Internet (3) is the data network (1) .

7. Telecommunication network for carrying out the method according to one of Claims 1 to 6 which comprises a data network (1), which a subscriber can only access when a terminal (8) belonging to the subscriber is registered in/logged into it, and a voice network (2), which is a telecommunication network suitable for voice transmission and which the subscriber can access via the data network (1), having a call-processing server (7) of the voice network (2), which provides call redirections to other destinations in the telecommunication network, and having a management server (6), which is used for managing and controlling the user services and network capacities in the data network (1), wherein at least one address for call redirection for the subscriber is stored in the call-processing server (7) or in the management server (6),
**characterized**
**in that**, when the subscriber is called from the voice network (2), the call-processing server (7) is suited to having a test facility in order to test for the existence of a registration of the subscriber's terminal (8) for the data network (1) on the management server (6), and in that the call-processing server (7) is suited to performing call redirection to the stored address in the absence of such registration.

8. Telecommunication network according to Claim 7,
**characterized**
**in that** the data network (1) is a network with packet switching.

9. Telecommunication network according to Claim 7 or 8,
**characterized**
**in that** the address for call redirection is stored on the management server (6) of the data network (1), and the management server (6) is suited to transmitting the address with the result of the test to the call-processing server (7).

10. Telecommunication network according to one of Claims 7 to 9,
**characterized**
**in that** the call-processing server (7) is suited to storing a maximum number for serial call redirections which are to be performed.

11. Telecommunication network according to one of the preceding claims,
**characterized**
**in that** the data network (1) in the form of a packet network is the Internet (3) and the management server (6) is a gatekeeper (6).

12. Telecommunication network according to one of Claims 7 to 11,
**characterized**
**in that** the telecommunication network in the form of a packet network is a local area network (LAN) and the management server (6) is a gatekeeper.

## Revendications

1. Procédé de renvoi d'appel dans un réseau de télécommunications qui comprend un réseau de données (1) auquel un usager n'a accès que si un terminal (8) de l'usager entre en communication avec / se connecte à ce réseau de données (1) et un réseau vocal (2) qui y est relié, lequel est un réseau de télécommunications approprié aux fins de la transmission vocale et auquel l'usager accède via le réseau de données (1), le réseau de télécommunications comportant un serveur de commutation (7) qui met à disposition des renvois d'appels vers d'autres destinations dans le réseau de télécommunications, et comportant un serveur d'administration (6) qui sert à l'administration et au contrôle des services utilisateurs et des capacités réseau dans le réseau de données (1), une adresse pour un renvoi d'appel étant stockée dans le serveur de commutation (7) ou le serveur d'administration (6), comportant les étapes suivantes:
a) constatation, par le serveur de commutation (7), de la présence d'un appel pour l'usager;
b) transfert de l'adresse d'usager au serveur d'administration (6);
c) vérification, à l'aide du serveur d'administration (6), si un terminal (8) est en communication avec / connecté à cette adresse d'usager;
d) transfert du résultat de la vérification du serveur d'administration (6) au serveur de commutation (7) et
e) renvoi de l'appel à l'adresse prédéterminée par le serveur de commutation (7) lorsque le serveur d'administration transfère le résultat «non connecté».

2. Procédé de renvoi d'appel dans des réseaux de télécommunications selon la revendication 1, **caractérisé en ce que** le réseau de données (1) est un réseau à commutation de paquets.

3. Procédé de renvoi d'appel dans des réseaux de télécommunications selon la revendication 1 ou 2, **caractérisé en ce que** l'adresse pour le renvoi d'appel est transférée par le serveur d'administration, avec le résultat de la vérification, au serveur de commutation (7) ou est extraite d'un emplacement de mémoire du serveur de commutation.

4. Procédé de renvoi d'appel dans des réseaux de télécommunications selon l'une des revendications 1 à 3, **caractérisé en ce que** le serveur de commutation (7) n'effectue un renvoi d'appel à effectuer que si un nombre maximal de renvois d'appels en série est dépassé.

5. Application du procédé de renvoi d'appel selon l'une des revendications précédentes dans le cas d'un Local Area Network (LAN) en tant que réseau de données (1).

6. Application du procédé de renvoi d'appel selon l'une des revendications précédentes dans le cas de l'internet (3) en tant que réseau de données (1).

7. Réseau de télécommunications pour exécuter le procédé selon l'une des revendications 1 à 6, lequel comprend un réseau de données (1) auquel un usager n'a accès que si un terminal (8) de l'usager est en communication avec celui-ci / y est connecté et un réseau vocal (2) qui est un réseau de télécommunications approprié aux fins de la transmission vocale et auquel l'usager accède via le réseau de données (1), avec un serveur de commutation (7) du réseau vocal (2) qui met à disposition des renvois d'appels vers d'autres destinations dans le réseau de télécommunications et avec un serveur d'administration (6) qui sert à l'administration et au contrôle des services utilisateurs et des capacités réseau dans le réseau de données (1), au moins une adresse pour un renvoi d'appel pour l'usager étant stockée dans le serveur de commutation (7) ou le serveur d'administration (6), **caractérisé en ce que** le serveur de commutation (7) est adapté pour, lorsque l'usager est appelé à partir du réseau vocal (2), comporter une possibilité d'interrogation pour demander au serveur d'administration (6) si le terminal (8) de l'usager est connecté au réseau de données (1) et **en ce que** le serveur de commutation (7), en l'absence d'une telle connexion, est adapté pour effectuer un renvoi d'appel vers l'adresse stockée.

8. Réseau de télécommunications selon la revendication 7, **caractérisé en ce que** le réseau de données (1) est un réseau à commutation de paquets.

9. Réseau de télécommunications selon la revendication 7 ou 8, **caractérisé en ce que** l'adresse pour un renvoi d'appel est stockée dans le serveur d'administration (6) du réseau de données (1) et le serveur d'administration (6) est adapté pour transmettre l'adresse avec le résultat de l'interrogation au serveur de commutation (7).

10. Réseau de télécommunications selon l'une des revendications 7 à 9, **caractérisé en ce que** le serveur de commutation (7) est adapté pour mettre en mémoire un nombre maximal pour des renvois d'appels à effectuer en série.

11. Réseau de télécommunications selon l'une des revendications précédentes, **caractérisé en ce que** le réseau de données (1) qui se présente sous la forme d'un réseau de paquets est l'internet (3) et le serveur d'administration (6), un portier (6).

12. Réseau de télécommunications selon l'une des revendications 7 à 11, **caractérisé en ce que** le réseau de télécommunications qui se présente sous la forme d'un réseau de paquets est un Local Area Network (LAN) et le serveur d'administration (6), un portier.
